# EUROPÄISCHE PATENTSCHRIFT

(11) **EP 3 609 744 B1**
(45) Veröffentlichungstag und Bekanntmachung des Hinweises auf die Patenterteilung: **23.12.2020**
(21) Anmeldenummer: 18712173.6
(22) Anmeldetag: 16.03.2018
(51) Int. Cl.: B60R 21/015, B60R 22/28, F16F 7/12

(54) **SICHERHEITSGURTEINRICHTUNG FÜR EIN FAHRZEUG**
SAFETY BELT DEVICE FOR A VEHICLE
SYSTÈME DE CEINTURE DE SÉCURITÉ POUR VÉHICULE

(30) Priorität: 17.03.2017 DE 102017204508
(43) Veröffentlichungstag der Anmeldung: 19.02.2020
(73) Patentinhaber: Volkswagen Aktiengesellschaft, 38440 Wolfsburg (DE)
(72) Erfinder: MÖKER, Carsten, 38471 Rühen (DE)
(86) Internationale Anmeldenummer: PCT/EP2018/056618
(87) Internationale Veröffentlichungsnummer: WO 2018/167251

(56) Entgegenhaltungen:
- EP-A1- 0 557 865
- DE-A1-102009 030 509
- DE-A1-102009 030 511
- GB-A- 2 327 919
- US-A- 5 664 807

## Beschreibung

Die Erfindung betrifft eine Sicherheitsgurteinrichtung für ein Fahrzeug nach dem Oberbegriff des Patentanspruches 1.

Eine solche Sicherheitsgurteinrichtung kann beispielhaft einen Drei-Punkt-Sicherheitsgurt, bestehend aus einem Beckengurtanteil und einem Schultergurtanteil, sowie einen Gurtaufroller aufweisen, auf dessen Wickeltrommel der Sicherheitsgurt aufwickelbar ist. Bei einem, am Fahrzeuginsassen angelegten Sicherheitsgurt wird die Wickeltrommel des Gurtaufrollers im Falle einer unfallbedingten Fahrzeugverzögerung mit Hilfe einer darin verbauten Blockiereinrichtung blockiert, um einen Gurtauszug zu verhindern. Dadurch wirkt eine Gurtkraft auf den Fahrzeuginsassen. Um die auf den Fahrzeuginsassen wirkende Gurtkraft zu begrenzen, kann eine Gurtkraftbegrenzungseinheit vorgesehen sein, mittels der die auf einen Fahrzeuginsassen ausgeübte Gurtkraft auf ein vordefiniertes Kraftniveau begrenzt ist.

Aus der GB 2 327 919 A ist eine Sicherheitsgurteinrichtung für ein Fahrzeug bekannt, das eine solche Gurtkraftbegrenzungseinheit aufweist. Diese ist als eine Kolben-/Zylinderanordnung mit einem radial äußeren Kolbenrohr und einem radial innerhalb des Kolbenrohrs verlagerbaren Kolben realisiert. In einem Gurtkraftbegrenzungsfall wird der Kolben unter Aufweitung sowie plastischer Verformung des Kolbenrohrs um einen Kraftbegrenzungsweg in Axialrichtung verlagert, wodurch die auf den Fahrzeuginsassen ausgeübte Gurtkraft begrenzt ist.

In der GB 2 327 919 A weist das Kolbenrohr drei in Axialrichtung hintereinander angeordnete Rohrsegmente auf, an deren Innenumfang gleichmäßig umfangsverteilte Axialstege angeformt sind. Zur Einstellung einer Kraftkennlinie (das heißt Gurtkraftniveau über den Kraftbegrenzungsweg) weisen die Rohrsegmente unterschiedliche Anzahlen von Axialrippen auf. In ähnlicher Weise ist die aus der EP 0 568 327 A2 aufgebaute Gurtkraftbegrenzungseinheit aufgebaut, deren Kolbenrohr, über den Kraftbegrenzungsweg betrachtet, einen variierenden Innenquerschnitt aufweist. Die Bereitstellung von in der Axialrichtung variierenden Innenquerschnitten am Kolbenrohr ist jedoch mit hohem Fertigungsaufwand verbunden. Zudem ist aufgrund der in der GB 2 327 919 A materialeinheitlich und einstückig am Kolbenrohr-Innenumfang ausgebildeten Axialstege eine werksseitige Änderung der Kraftkennlinie der Gurtkraftbegrenzungseinheit nur mit hohem Werkzeugaufwand durchführbar.

Aus der DE 42 24 924 A1 ist eine weitere Gurtkraftbegrenzungseinheit bekannt, bei der die Materialstärke des darin verwendeten Kolbenrohrs in der Axialrichtung vergrößert wird.

Aus der US 5 664 807 A ist eine gattungsgemäße Sicherheitsgurteinrichtung für ein Fahrzeug bekannt. Aus der EP 0 557 865 A1, aus der DE 10 2009 030509 A1 und aus der DE 10 2009 030511 A1 sind weitere Sicherheitsgurteinrichtungen für Fahrzeug bekannt.

Die Aufgabe der Erfindung besteht darin, eine Sicherheitsgurteinrichtung für ein Fahrzeug bereitzustellen, deren Gurtkraftbegrenzungseinheit in einfacher Weise eine Anpassung der Kraftkennlinie der Gurtkraftbegrenzungseinheit ermöglicht.

Die Aufgabe ist durch die Merkmale des Patentanspruches 1 gelöst. Bevorzugte Weiterbildungen der Erfindung sind in den Unteransprüchen offenbart.

Die Erfindung beruht auf dem Sachverhalt, dass im Crashfall die auf den Fahrzeuginsassen wirkende Gurtkraft unabhängig von dessen Größe, Körpergewicht und/oder aktueller Sitzposition geeignet begrenzt sein muss. Vor diesem Hintergrund weist die Sicherheitsgurteinrichtung gemäß dem kennzeichnenden Teil des Patentanspruches 1 eine Schalteinheit auf, mittels der in Abhängigkeit von der Größe, dem Körpergewicht und/oder der aktuellen Sitzposition des Fahrzeuginsassen ein Kraftniveau-Verlauf über den Kraftbegrenzungsweg im Kolbenrohr vordefinierbar ist. Auf diese Weise kann das Kraftbegrenzungsniveau zu einem bestimmten, frei wählbaren Zeitpunkt gezielt auf das Körpergewicht, die Größe und/oder die Sitzposition des Fahrzeuginsassen angepasst werden.

Die gezielte Anpassung des Kraftbegrenzungsniveaus (das heißt des Kraftniveau-Verlaufes) über den Kraftbegrenzungsweg im Kolbenrohr wird unmittelbar vor einem Crash-Zeitpunkt in einer Pre-Crash-Phase selbsttätig von der Schalteinheit durchgeführt.

Bevorzugt zielt die Erfindung darauf ab, dass ein hartes und abruptes Anstoßen des Kolbens an einem Bewegungsanschlag am Ende des Kraftbegrenzungsweges verhindert wird, um die Belastung - vorrangig bei großen schweren Fahrzeuginsassen (das heißt 95%-Mann) - zu reduzieren. Um in diesem Fall das Kraftniveau zu erhöhen bzw. zu schalten, kann eine schleifenartig geformte Schelle bereitgestellt sein, die um das Kolbenrohr umwickelt ist. Die Schelle ist grundsätzlich variabel in ihrer Breite sowie in ihrer axialen Positionierung am Kolbenrohr (das heißt vorne, mittig oder hinten). Im Falle des oben erwähnten 95%-Mannes ist es bevorzugt, wenn die Schelle hinten platziert ist, um im Kraftniveau-Verlauf eine Progressivität zu erzeugen. In einer Nichtgebrauchslage kann ein Freiraum zwischen der Schelle und dem Kolbenrohr vorhanden sein und zum Beispiel zirka 1,0 mm betragen. Eine Kraftschaltung von ihrer Nichtgebrauchslage in die Gebrauchslage erfolgt beispielhaft pyrotechnisch, in dem an einer Zuglasche der Schelle eine Zugkraft ausgeübt wird. Die Blechdicke der Schelle kann beispielhaft 1,0 mm betragen.

Nachfolgend sind weitere Aspekte der Erfindung detailliert erläutert: So ist die Schalteinheit in Signalverbindung mit einer Crashsensorik und mit einer Insassenerkennungssensorik. Mittels der Insassenerkennungssensorik wird die Größe, das Gewicht und/oder die Sitzposition des Fahrzeuginsassen ermittelt. Zusätzlich wird mittels der Schalteinheit ein Stellglied angesteuert, mit dem in Abhängigkeit von der Größe, dem Gewicht oder der Sitzposition des aktuellen Fahrzeuginsassen eine Bauteilfestigkeit des Kolbenrohrs reduziert oder erhöht wird. Die Ansteuerung des Stellglieds wird erst dann freigegeben, wenn mittels der Crashsensorik das Vorliegen einer Pre-Crash-Phase bestimmt worden ist.

Bei Ermittlung eines überdurchschnittlich hohen Körpergewichts des Fahrzeuginsassen (das heißt 95%-Mann) kann exemplarisch die Schalteinheit unter Ansteuerung des Stellglieds die Kolbenrohr-Bauteilfestigkeit erhöhen. Umgekehrt kann bei Ermittlung eines unterdurchschnittlich geringen Körpergewichts des Fahrzeuginsassen (das heißt 5%-Frau) die Schalteinheit unter Ansteuerung des Stellglieds die Kolbenrohr-Bauteilsteifigkeit reduzieren. Alternativ kann bei Ermittlung eines unterschiedlich geringen Körpergewichts des Fahrzeuginsassen die Schalteinheit auch deaktiviert bleiben, das heißt keine Ansteuerung des Stellglieds erfolgen.

In einer technischen Realisierung der Erfindung kann das Stellglied ein schleifenartiges Zugband aufweisen. Das Zugband kann in einem Fahrzeug-Normalbetrieb (das heißt in einer Nichtgebrauchslage) lose mit Bewegungsspiel um das Kolbenrohr gewickelt sein und somit keinen Einfluss auf die Kolbenrohr-Bauteilfestigkeit ausüben. Erst bei geeigneter Ansteuerung vom Schaltelement kann das Zugband in eine Gebrauchslage überführt werden. In der Gebrauchslage kann das Zugband unter Bildung einer Doppelrohrstruktur mit einer Zugspannung um das Kolbenrohr gewickelt sein, um die Kolbenrohr-Bauteilfestigkeit zu erhöhen.

In einer einfachen bevorzugten Ausführung kann das Stellglied eine elektrisch auslösbare, pyrotechnische Straffereinheit aufweisen, mittels der das Zugband in seiner Gebrauchslage mit der Zugspannung beaufschlagbar ist. Das Zugband kann bevorzugt eine Blechschelle sein, die in fertigungstechnisch einfacher Weise durch Blechumformung hergestellt ist. Die Blechschelle kann in einer Abwicklung mit Bezug auf ihre Längsachse spiegelsymmetrisch ausgeführt sein und eine breite Befestigungslasche mit einem fensterartigen Durchbruch aufweisen. Im weiteren Verlauf in der Längserstreckungsrichtung kann sich an die breite Befestigungslasche eine schmale Zuglasche anschließen. Im Montagezustand kann die Zuglasche unter Bildung einer Schleife (nachfolgend auch als Windung oder Wicklung bezeichnet) durch den fensterartigen Durchbruch geführt sein und an der Straffereinheit angebunden sein. Die Schleife (das heißt Windung oder Wicklung) umfasst dabei außenseitig das Kolbenrohr.

Die oben erwähnte Straffereinheit kann wiederum signaltechnisch mit der elektronischen Schalteinheit verbunden sein und von dieser ansteuerbar sein. Die Ansteuerung der Straffereinheit erfolgt bevorzugt erst dann, wenn mittels der Crashsensorik eine Pre-Crash-Phase festgestellt worden ist.

Der Zusammenbau des Zugbandes mit dem Kolbenrohr erfolgt in fertigungstechnisch einfacher Weise sowie ohne großen Werkzeugaufwand. Bevorzugt ist die mittels der Zuglasche gebildete Wicklung oder Windung lediglich ringförmig (das heißt im Vergleich zum Kolbenrohr sehr geringer Rohrlänge) ausgeführt. Alternativ dazu kann die Zugband-Wicklung eine größere Rohrlänge aufweisen, die jedoch deutlich kleiner als die Rohrlänge des Kolbenrohrs ausgelegt sein kann. Entscheidend ist lediglich, dass im Zusammenbauzustand das Kolbenrohr zumindest einen, von der Zugband-Wicklung umfassten Kolbenrohrabschnitt sowie zumindest einen von der Zugband-Wicklung freigelegten Kolbenrohrabschnitt aufweist.

Die Zugband-Wicklung kann im Fertigungsprozess leichtgängig in ihre vordefinierte Axialposition gebracht werden. In der vorgegebenen Axialposition kann die Zugband-Wicklung in beliebiger Weise über ihre Befestigungslasche an einem angrenzenden Bauteil, insbesondere am Fahrzeugaufbau, fixiert werden, zum Beispiel durch eine kraft-, stoff- und/oder formschlüssige Verbindung. Fertigungstechnisch vorteilhaft kann in der Nichtgebrauchslage, das heißt im normalen Fahrbetrieb auf eine feste Verbindung unmittelbar zwischen der Zugband-Wicklung und dem Kolbenrohr verzichtet werden, da die Zugband-Wicklung das Kolbenrohr umfangsseitig mit einem zwischengeschalteten Ringspalt umgreift.

In einer technischen Umsetzung kann das Kolbenrohr sowohl innen- als auch außenumfangsseitig über dessen gesamte Rohrlänge mit einem konstanten Innen- und Außendurchmesser (das heißt mit konstantem Innenquerschnitt) sowie bevorzugt glattzylindrisch ausgebildet sein. Auf diese Weise kann das Kolbenrohr in einer einfachen zylindrischen Bauteilgeometrie, das heißt ohne spezielle Innen- oder Außenstruktur, vorgehalten werden. In gleicher Weise kann auch die Zugband-Wicklung innen- und außenseitig glattflächig ausgeführt sein.

Das Zugband kann bevorzugt fertigungstechnisch einfach durch eine Blechumformung als eine Blechschelle realisiert sein.

Mittels der Axialposition der Zugband-Wicklung auf dem Kolbenrohr wird die Kraftkennlinie der Gurtkraftbegrenzungseinheit festgelegt. Exemplarisch kann die Gurtkraftbegrenzungseinheit eine progressive, eine degressive oder eine wellenförmige Kraftkennlinie aufweisen. Für einen progressiven Kraftniveau-Verlauf kann die Zugband-Wicklung am Ende des Kraftbegrenzungswegs auf dem Kolbenrohr positioniert sein. Anstelle dessen kann für einen degressiven Kraftniveau-Verlauf die Zugband-Wicklung zu Beginn des Kraftbegrenzungsweg auf dem Kolbenrohr befestigt sein. Für einen wellenförmigen Kraftniveau-Verlauf kann die Zugband-Wicklung auf einem Mittelabschnitt des Kolbenrohrs befestigt sein.

In einer technischen Umsetzung ist das Kolbenrohr sowohl innen- als auch außenumfangsseitig über dessen gesamte Rohrlänge mit einem konstanten Innen- und Außendurchmesser (das heißt mit konstantem Innenquerschnitt) sowie bevorzugt glattzylindrisch ausgebildet. Auf diese Weise kann das Kolbenrohr in einer einfachen zylindrischen Bauteilgeometrie, das heißt ohne spezielle Innen- oder Außenstruktur, vorgehalten werden. In gleicher Weise kann auch das die Zugband-Wicklung sowohl innen- als auch außenumfangsseitig über deren gesamte Rohrlänge mit einem konstanten Innen- und Außendurchmesser sowie ebenfalls glattzylindrisch ausgeführt sein.

Mittels der Axialposition der Zugband-Wicklung auf dem Kolbenrohr wird die Kraftkennlinie der Gurtkraftbegrenzungseinheit festgelegt. Exemplarisch kann die Gurtkraftbegrenzungseinheit eine progressive, eine degressive oder eine wellenförmige Kraftkennlinie aufweisen. Für einen progressiven Kraftniveau-Verlauf kann die Zugband-Wicklung am Ende des Kraftbegrenzungswegs auf dem Kolbenrohr befestigt sein. Anstelle dessen kann für einen degressiven Kraftniveau-Verlauf die Zugband-Wicklung zu Beginn des Kraftbegrenzungswegs auf dem Kolbenrohr befestigt sein. Für einen wellenförmigen Kraftniveau-Verlauf kann die Zugband-Wicklung auf einem Mittelabschnitt des Kolbenrohrs befestigt sein.

Die erfindungsgemäße Gurtkraftbegrenzungseinheit kann in einer Sicherheitsgurteinrichtung realisiert sein, die exemplarisch einen Drei-Punkt-Sicherheitsgurt mit einem Beckengurtanteil sowie einem Schultergurtanteil aufweist. Im angelegten Zustand kann der Sicherheitsgurt mittels einer Gurtzunge in lösbarer Verbindung mit einem fahrerseitigen Gurtschloss sein. Das Gurtschloss kann über ein Drahtseilelement sowie über die Kraftbegrenzungseinheit am Fahrzeugaufbau befestigt sein. In diesem Fall kann das Drahtseilelement mit seinem Seilende durch das Kolbenrohr der Gurtkraftbegrenzungseinheit geführt sein und am Kolben angebunden sein. Das Drahtseilelement kann ausgehend vom Gurtschloss durch einen fahrzeugaufbauseitigen Umlenkbeschlag mit Seilumlenkung geführt sein, wobei der Umlenkbeschlag aufbaufest an der Fahrzeugkarosserie montierbar ist. Im weiteren Verlauf kann sich am Umlenkbeschlag die Gurtkraftbegrenzungseinheit anschließen. In diesem Fall kann der Umlenkbeschlag eine Stützkontur aufweisen, gegen die das Kolbenrohr mit seiner dem Kolben abgewandten Seite im Gurtkraftbegrenzungsfall abgestützt werden kann.

Nachfolgend ist ein Ausführungsbeispiel der Erfindung anhand der beigefügten Figuren detailliert beschrieben.

Es zeigen:
- Fig. 1: in einer perspektivischen Darstellung eine Sicherheitsgurteinrichtung mit angelegtem Sicherheitsgurt, jedoch unter Weglassung des Fahrzeuginsassen;
- Fig. 2: eine Baueinheit, bestehend aus dem Gurtschloss der Sicherheitsgurteinrichtung und der Gurtkraftbegrenzungseinheit, in Alleinstellung;
- Fig. 3: in einer Schnittdarstellung entlang der Schnittebene A-A aus der Fig. 2 die Gurtkraftbegrenzungseinheit in einer Nichtgebrauchslage;
- Fig. 4: in einer Ansicht entsprechend der Fig. 3 die Gurtkraftbegrenzungseinheit in einer Gebrauchslage;
- Fig. 5: eine Blechschelle in einer Abwicklung;
- Fig. 6: in einer Ansicht entsprechend der Fig. 2 eine Gurtkraftbegrenzungseinheit in teilweiser Schnittdarstellung sowie mit einer Blechschellen-Wicklung, die unmittelbar am Ende des Kraftbegrenzungsweges auf dem Kolbenrohr positioniert ist; und
- Fig. 7: eine Kraftkennlinie der in der Fig. 6 gezeigten Gurtkraftbegrenzungseinheit.

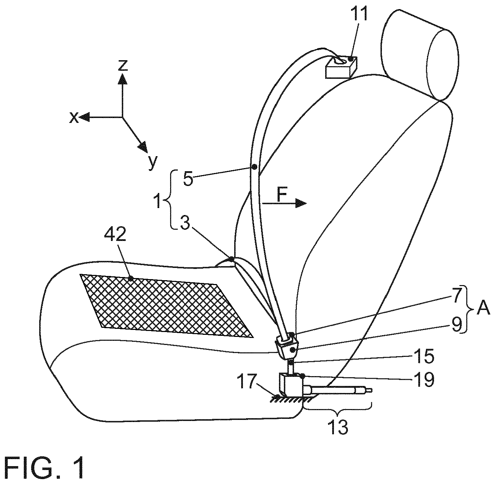

In der Fig. 1 ist ein Fahrzeugsitz mit zugeordneter Sicherheitsgurteinrichtung gezeigt, deren Sicherheitsgurt 1 im angelegten Zustand, jedoch ohne Fahrzeuginsassen, dargestellt ist. Demzufolge erstreckt sich in der Fahrzeugquerrichtung y ein Beckengurtanteil 3 des Sicherheitsgurtes 1 zwischen einem fahrzeuginneren Anbindungspunkt und einem fahrzeugäußeren Anbindungspunkt A. Der auf Beckenhöhe befindliche fahrzeuginnere Anbindungspunkt A ist lösbar ausgeführt, und zwar mit einer am Sicherheitsgurt 1 gehalterten Gurtzunge 7 und einem damit zusammenwirkenden, fahrzeugfesten Gurtschloss 9, in dem die Gurtzunge 7 eingesteckt ist. In etwa auf Schulterhöhe befindet sich ein dritter fahrzeugäußerer Anbindungspunkt. Dieser ist in gängiger Praxis durch einen nicht gezeigten, an einer nicht dargestellten Fahrzeugsäule montierten Umlenkbeschlag realisiert, um den der Schultergurtanteil 5 bis zu einem in der Fahrzeugsäule verbauten Gurtaufroller 11 geführt ist, in der der Sicherheitsgurt 1 auf einer Wickeltrommel aufwickelbar ist. Der Gurtaufroller 11 weist in gängiger Praxis eine Blockiereinheit auf. Bei einem, am Fahrzeuginsassen angelegten Sicherheitsgurt 1 wird die Wickeltrommel des Gurtaufrollers 9 im Fall einer unfallbedingten Fahrzeugverzögerung mit Hilfe der Blockiereinheit blockiert, um einen Gurtauszug zu verhindern. Dadurch wirkt eine Gurtkraft F (Fig. 1) vom Sicherheitsgurt 1 auf den Fahrzeuginsassen. Übersteigt die Gurtkraft F einen vorgegebenen Grenzwert, so wird eine Gurtkraftbegrenzungseinheit 13 aktiv, mittels der die auf den Fahrzeuginsassen ausgeübte Gurtkraft F auf ein vordefiniertes Kraftniveau begrenzbar ist.

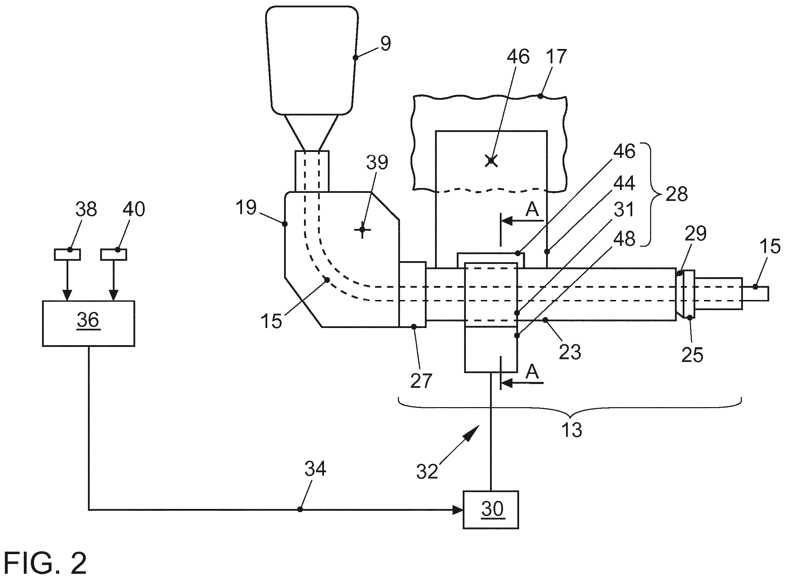

Wie aus der Fig. 2 hervorgeht, ist das Gurtschloss 9 über ein Drahtseil 15 sowie über die Gurtkraftbegrenzungseinheit 13 an einem Umlenkbeschlag 19 befestigt, der am in der Fig. 1 grob angedeuteten Fahrzeugaufbau 17 montiert ist. Demzufolge ist das Drahtseil 15 mit einem Ende am Gurtschloss 9 befestigt und über den fahrzeugaufbauseitigen Umlenkbeschlag 19 mit Seilumlenkung geführt. Im weiteren Verlauf schließt sich die Gurtkraftbegrenzungseinheit 13 an, die als eine Kolben-/Zylinder-Anordnung realisiert ist, und zwar mit einem Kolbenrohr 23 und einem Kolben 25. Das Drahtseil 15 ist gemäß der Fig. 2 nach dem Umlenkbeschlag 19 durch das Kolbenrohr 25 geführt und am Kolben 25, zum Beispiel durch Verprägung, angebunden. Dieser ist in der seiner dargestellten Ruhelage oder Nichtgebrauchslage mit seiner konusartigen Kolbenspitze 29 in Anlage mit einer vom Umlenkbeschlag 19 abgewandten Stirnseite des Kolbenrohrs 23. Von daher ist das Kolbenrohr 23 in der Axialrichtung zwischen einem topfförmigen Anschlagelement 27, das am Umlenkbeschlag 19 ausgebildet ist, und der konusartigen Kolbenspitze 29 angeordnet, die teilweise in das Kolbenrohr 23 einragt.

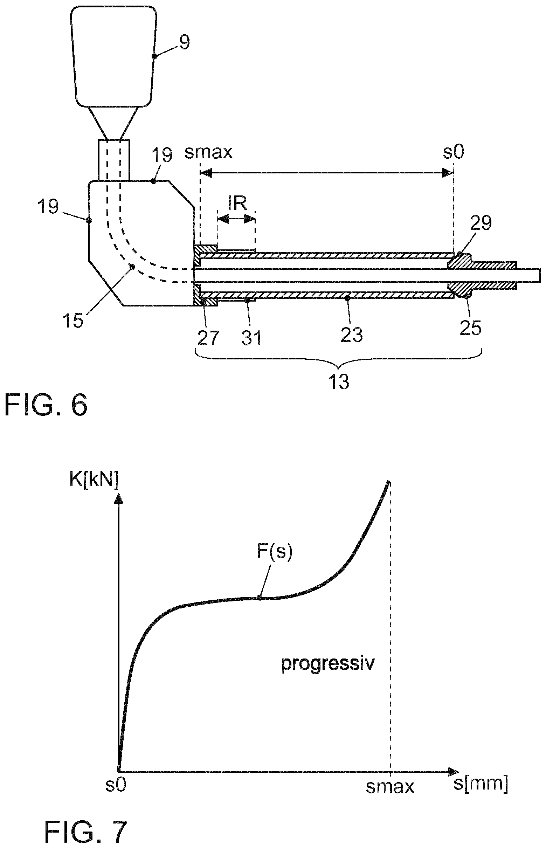

Bei einer unfallbedingten Fahrzeugverzögerung blockiert die Blockiereinheit die Wickeltrommel des Gurtaufrollers 11, um einen Gurtauszug zu verhindern. Übersteigt die auf den Fahrzeuginsassen wirkende Gurtkraft F einen vorgegebenen Grenzwert, so wird der Kolben 25 unter Aufweitung sowie plastischer Verformung um einen Kraftbegrenzungsweg s innerhalb des Kolbenrohrs 23 verlagert. Auf diese Weise wird die auf den Fahrzeuginsassen ausgeübte Gurtkraft F auf ein vordefiniertes Kraftniveau begrenzt. Dabei entspricht der maximal mögliche Kraftbegrenzungsweg sₘₐₓ (Figur 6) der Kolbenrohrlänge.

Das von der Gurtkraftbegrenzungseinheit 13 über den Kraftbegrenzungsweg s (Fig. 7) bereitgestellte Gurtkraftniveau kann in einer Kraftkennlinie wiedergegeben werden, wie sie später anhand der Fig. 6 und 7 erläutert wird. Eine solche Kraftkennlinie wird erfindungsgemäß mittels einer Blechschelle 28 (Fig. 2) eingestellt, die in den Figuren 2 bis 4 zusammen mit einer elektronisch ansteuerbaren, pyrotechnischen Straffereinheit 30 ein Stellglied 32 bildet. Das Stellglied 32 (nur als Blockschaltbild angedeutet) ist über eine elektrische Signalleitung 34 in Signalverbindung mit einer elektronischen Schalteinheit 36. Diese ist wiederum signaltechnisch mit einer Crashsensorik 38 und mit einer Insassenerkennungssensorik 40 in Verbindung, die in der Fig. 1 unter anderem eine in einer Sitzfläche des Fahrzeugsitzes integrierte Sitzbelegungsmatte 42 aufweisen kann.

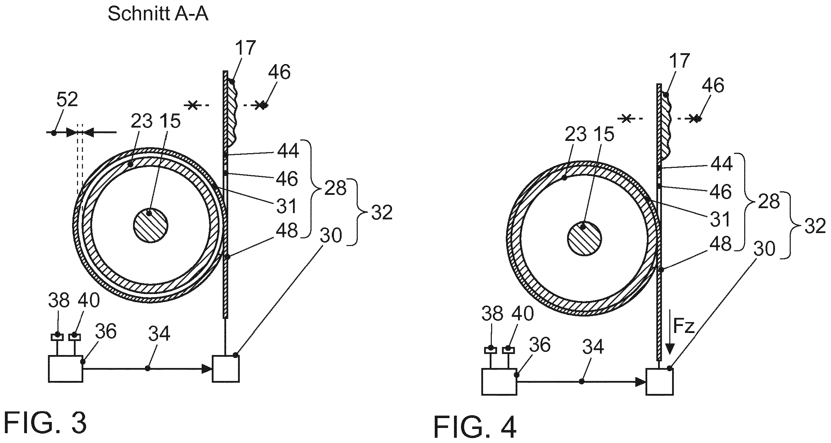

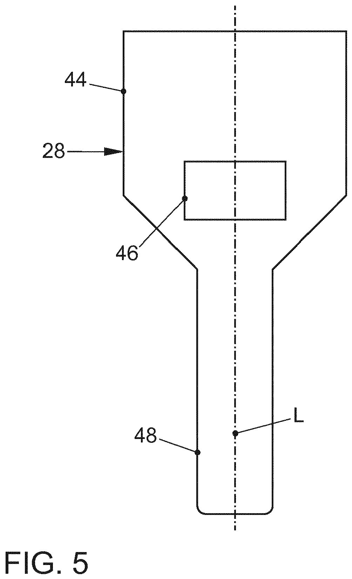

Mit Hilfe der Crashsensorik 38 kann im Fahrbetrieb eine Pre-Crash-Phase unmittelbar vor einem Crash-Zeitpunkt bestimmt werden. Mittels der Insassenerkennungssensorik 40 kann die Größe, das Körpergewicht und/oder die aktuelle Sitzposition des auf dem Fahrzeugsitz platzierten Fahrzeuginsassen ermittelt werden. Wie aus der Fig. 2 und 3 weiter hervorgeht, ist die Blechschelle 28 mit einer oberen Befestigungslasche 44 am Fahrzeugaufbau 17 zum Beispiel über eine Schraubverbindung 46 befestigt. Die Blechschelle 28 ist gemäß der Fig. 5 aus einem einfachen Blechzuschnitt durch Blechumformung hergestellt. Der Blechzuschnitt weist in der Fig. 5 in Abwicklung die bereits erwähnte Befestigungslasche 44 auf, in der ein fensterartiger Durchbruch 46 ausgeschnitten ist. Im weiteren Verlauf in der Längserstreckungsrichtung L nach unten folgt eine schmale Zuglasche 48. Diese ist in der in der Fig. 3 gezeigten Montagelage durch den fensterartigen Durchbruch 46 hindurchgeführt, und zwar unter Bildung einer Blechschellen-Wicklung 31, und an der Straffereinheit 30 angebunden. In der in der Fig. 3 gezeigten Nichtgebrauchslage (das heißt im normalen Fahrbetrieb) ist die Blechschellen-Wicklung 31 um einen freien Ringspalt 52 vom Außenumfang des Kolbenrohrs 23 beabstandet.

Im normalen Fahrbetrieb hat die Blechschelle 28 daher keinen Einfluss auf die Bauteilsteifigkeit des Kolbenrohrs 23. In einer Crashsituation kann dagegen die folgende Kraftschaltung erfolgen: So kann zunächst mittels der Crashsensorik 38 zunächst eine Pre-Crash-Phase festgestellt werden. Mittels der Insassenerkennungssensorik 40 kann exemplarisch ein überdurchschnittlich hohes Körpergewicht des aktuellen Fahrzeuginsassen ermittelt worden sein. In diesem Fall kann ein Auswerte-Programmbaustein in der elektronischen Schalteinheit 36 ein Aktivierungssignal generieren, mit dem die Straffereinheit 30 ausgelöst wird. Nach der Auslösung der Straffereinheit 30 ist die Blechschelle 28 in ihre Gebrauchslage überführt, wie sie in der Fig. 4 gezeigt ist. Demzufolge wird die Zuglasche 48 der Blechschelle 28 mit einer Zugkraft Fz (Figur 4) beaufschlagt, so dass die Blechschellen-Wicklung 31 mit Zugspannung um das Kolbenrohr 23 gewickelt ist, und zwar unter Bildung einer Doppelrohrstruktur, mittels der die Bauteilfestigkeit des Kolbenrohrs 23 in dessen vorderem Bereich erhöht ist. Auf diese Weise wird ein hartes oder abruptes Anstoßen des Kolbens 25 am Bewegungsanschlag 27 verhindert.

In einer alternativen Crashsituation kann die Insassenerkennungssensorik 40 ein unterschiedlich geringes Körpergewicht des aktuellen Fahrzeuginsassen ermitteln. In diesem Fall kann aufgrund des reduzierten Körpergewichts des Fahrzeuginsassen auf die Auslösung der Straffereinheit 30 verzichtet werden.

In der Fig. 6 ist die Blechschellen-Wicklung 31 unmittelbar am Anschlagelement 27 auf dem Kolbenrohr 23 positioniert. Die Rohrlänge I_{R} der Blechschellen-Wicklung 31 beträgt rein beispielhaft etwa 10% der Rohrlänge des Kolbenrohrs 23. Entsprechend weist das Kolbenrohr 23 einen von der Blechschellen-Wicklung 31 umfassten Rohrabschnitt sowie einen von der Blechschellen-Wicklung 31 freigelegten Rohrabschnitt auf. Bei der in der Fig. 6 gezeigten Anordnung steigt in einem Gurtkraftbegrenzungsfall (das heißt in der oben erwähnten Pre-Crash-Phase), bei dem der Kolben 25 über den maximalen Kraftbegrenzungsweg sₘₐₓ verlagert wird, das Kraftniveau progressiv an, wie es in der Fig. 7 gezeigt ist. Ein solcher progressiver Kraftniveau-Verlauf ist insbesondere bei einem großen, schweren Fahrzeuginsassen (95%-Mann) vorteilhaft, um ein hartes sowie abruptes Anstoßen des Kolbens 25 am Anschlagelement 27 zu verhindern.

### Bezugszeichenliste

- 1: Sicherheitsgurt
- 3: Beckengurtanteil
- 5: Schultergurtanteil
- 7: Gurtzunge
- 9: Gurtschloss
- 11: Gurtaufroller
- 13: Gurtkraftbegrenzungseinheit
- 15: Drahtseilelement
- 17: Fahrzeugaufbau
- 19: Umlenkbeschlag
- 23: Kolbenrohr
- 25: Kolben
- 27: Anschlagelement
- 28: Blechschelle
- 29: konusartige Kolbenspitze
- 30: Straffereinheit
- 31: Blechschellen-Wicklung bzw. Zugband-Wicklung
- 32: Stellglied
- 33: Befestigungslasche
- 34: elektrische Signalleitung
- 35: Schraubverbindung
- 36: Schalteinheit
- 38: Crashsensorik
- 39: Anbindungspunkt
- 40: Insassenerkennungssensorik
- 42: Sitzbelegungsmatte
- 44: Befestigungslasche
- 46: fensterartiger Durchbruch
- 48: Zuglasche
- 52: Ringspalt
- s: Kraftbegrenzungsweg
- A: lösbarer Anbindungspunkt
- F: Gurtkraft
- Fz: Zugkraft

## Patentansprüche

1. Sicherheitsgurteinrichtung für ein Fahrzeug, mit einer Gurtkraftbegrenzungseinheit (13), die als eine Kolben-Zylinder-Anordnung aus einem Kolbenrohr (23) und aus einem Kolben (25) aufgebaut ist, der in einem Gurtkraftbegrenzungsfall, insbesondere Crashfall, unter Aufweitung sowie plastischer Verformung um einen Kraftbegrenzungsweg (s) im Kolbenrohr (23) verlagerbar ist, so dass die auf einen Fahrzeuginsassen ausgeübte Gurtkraft (F) auf ein vordefiniertes Kraftniveau begrenzt ist, **dadurch gekennzeichnet, dass** die Sicherheitsgurteinrichtung eine Schalteinheit (36) aufweist, mittels der in Abhängigkeit von der Größe, dem Gewicht und/oder der Sitzposition des Fahrzeuginsassen ein Kraftniveau-Verlauf (F(s)) über den Kraftbegrenzungsweg (s) vordefinierbar ist, und dass die Schalteinheit (36) in Signalverbindung mit einer Crashsensorik (38) und mit einer Insassenerkennungssensorik (40) ist, mittels der die Größe, das Gewicht und/oder die Sitzposition des Fahrzeuginsassen ermittelbar ist, und dass mittels der Schalteinheit (36) bei Vorliegen einer Pre-Crash-Phase ein Stellglied (32) ansteuerbar ist, mit dem in Abhängigkeit von der Größe/dem Gewicht oder der Sitzposition des Fahrzeuginsassen eine Bauteilfestigkeit des Kolbenrohrs (23) reduzierbar/erhöhbar ist.

2. Sicherheitsgurteinrichtung nach Anspruch 1, **dadurch gekennzeichnet, dass** das Stellglied (32) ein schleifenartiges Zugband (28) aufweist, und dass das Zugband (28) in einem Fahrzeug-Normalbetrieb, das heißt in einer Nichtgebrauchslage lose mit Bewegungsspiel (52) um das Kolbenrohr (23) gewickelt ist und keinen Einfluss auf die Bauteilfestigkeit des Kolbenrohrs (23) ausübt, und dass das Zugband (28) bei entsprechender Ansteuerung von der Schalteinheit (36), das heißt in einer Gebrauchslage, unter Bildung einer Doppelrohrstruktur mit Zugspannung um das Kolbenrohr (23) gewickelt ist und die Bauteilfestigkeit des Kolbenrohrs (23) erhöht.

3. Sicherheitsgurteinrichtung nach Anspruch 2, **dadurch gekennzeichnet, dass** das Stellglied (32) eine insbesondere elektrisch auslösbare, pyrotechnische Straffereinheit (30) aufweist, und dass das Zugband (28) mit einer Befestigungslasche (44) am Fahrzeugaufbau (17) befestigbar ist und mit der anderen Zuglasche (48) an der Straffereinheit (30) signaltechnisch mit der Schalteinheit (30) verbunden ist und von dieser ansteuerbar ist.

4. Sicherheitsgurteinrichtung nach Anspruch 2 oder 3, **dadurch gekennzeichnet, dass** das Zugband (28) eine Blechschelle ist, die in einer Abwicklung eine breite Befestigungslasche (44) mit einem fensterartigen Durchbruch (46) aufweist, wobei die Befestigungslasche (44) im weiteren Verlauf in einer Längserstreckungsrichtung in eine schmale Zuglasche (48) übergeht, und wobei die Zuglasche (48) unter Bildung einer Zugband-Wicklung (31), durch die sich das Kolbenrohr (23) erstreckt, durch den fensterartigen Durchbruch (46) geführt ist und an der Straffereinheit (30) angebunden ist.

5. Sicherheitsgurteinrichtung nach einem der vorhergehenden Ansprüche, **dadurch gekennzeichnet, dass** das Kolbenrohr (23) innen- und/oder außenumfangsseitig über dessen gesamte Rohrlänge mit konstantem Innen- und Außendurchmesser und/oder glattzylindrisch ausgebildet sind, und/oder dass die Zugband-Wicklung (31) innen- und/oder außenumfangsseitig über dessen gesamte Rohrlänge (I_{R}) mit konstantem Innen- und Außendurchmesser und/oder glattzylindrisch ausgebildet ist.

6. Sicherheitsgurteinrichtung nach einem der Ansprüche 4 oder 5, **dadurch gekennzeichnet, dass** für einen progressiven Kraftniveau-Verlauf die Zugband-Wicklung (31) am Ende (sₘₐₓ) des Kraftbegrenzungswegs (s) auf dem Kolbenrohr (23) positioniert ist, oder dass für einen degressiven Kraftniveau-Verlauf die Zugband-Wicklung (31) zu Beginn (so) des Kraftbegrenzungswegs (s) auf dem Kolbenrohr (23) positioniert ist, oder dass für einen wellenförmigen Kraftniveau-Verlauf die Zugband-Wicklung (31) auf einem Mittelabschnitt des Kolbenrohrs (23) positioniert ist.

7. Sicherheitsgurteinrichtung nach einem der vorhergehenden Ansprüche, **dadurch gekennzeichnet, dass** ein Sicherheitsgurt (1) im angelegten Zustand mit einer Gurtzunge (7) in lösbarer Verbindung mit einem fahrzeugseitigen Gurtschloss (9) ist, das über ein Drahtseilelement (15) und über die Kraftbegrenzungseinheit (13) am Fahrzeugaufbau (17) befestigbar ist, und dass das Drahtseilelement (15) mit seinem Seilende durch das Kolbenrohr (23) geführt ist und am Kolben (25) angebunden ist.

## Claims

1. Safety belt device for a vehicle, with a safety belt force limiting unit (13) constructed as a piston-cylinder arrangement, made up of a piston tube (23) and a piston (25), which can be displaced in the event of a safety belt force limitation, in particular a collision, with expansion and plastic deformation across a force limitation path (s) in the piston tube (23), so that the belt force (F) exerted on a vehicle occupant (F) is limited to a predefined force level, **characterized in that** the safety belt device has a switching unit (36) by means of which a force level profile (F(s)) across the force limitation path (s) can be predefined depending on the size, weight, and/or seating position of the vehicle occupant; and **in that** the switching unit (36) is connected in terms of signaling with a collision sensor system (38) and with an occupant detection sensor system (40) by means of which the size, weight, and/or seating position of the vehicle occupant can be determined; and **in that,** in the event of a pre-collision phase, an actuator (32) can be controlled by means of the switching unit (36), with which actuator (32) a component strength of the piston tube (23) can be reduced/increased depending on the size/the weight or the seating position of the vehicle occupant.

2. Safety belt device according to claim 1, **characterized in that** the actuator (32) has a loop-like pull strap (28); and **in that**, in normal vehicle operation, thus in a non-use situation, the pull strap (28) is wound loosely with play (52) around the piston tube (23) and exerts no influence on the component strength of said piston tube (23); and **in that**, with corresponding control of the switching unit (36), thus in a use situation, the pull strap (28) is wound with tensile stress around the piston tube (23) while forming a double-tube structure, and the component strength of the piston tube (23) increases.

3. Safety belt device according to claim 2, **characterized in that** the actuator (32) has a pyrotechnic tensioning unit (30) which in particular can be triggered electrically; and **in that** the pull strap (28) can be fastened to the vehicle body (17) by means of a fastening clip (44) and, with the other tensioning clip (48) at the tensioning unit (30), is connected in terms of signaling to the switching unit (30) and can be controlled by this.

4. Safety belt device according to claim 2 or 3, **characterized in that** the pull strap (28) is a sheet metal clip which, upon unwinding, has a wide fastening clip (44) with a window-like opening (48); wherein the fastening clip (44), in a further continuation in a longitudinal extension direction, transitions into a narrow tensioning clip (48); and wherein the tensioning clip (48), under formation of a tensioning clip winding (31) through which the piston tube (23) extends, is guided through the window-like opening (46) and is connected to the tensioning unit (30).

5. Safety belt device according to any of the preceding claims, **characterized in that** the piston tube (23) are formed with a constant internal and external diameter and/or as a smooth cylinder on its internal and/or external circumference over its entire tube length; and/or **in that** the tensioning strap winding (31) is formed with a constant internal and external diameter and/or as a smooth cylinder on the internal and or external circumference over its entire tube length (I_{R}).

6. Safety belt device according to any of claims 4 or 5, **characterized in that,** for a progressive force level profile, the tensioning strap winding (31) is positioned on the piston tube (23) at the end (sₘₐₓ) of the force limitation path (s); or **in that,** for a degressive force level profile, the tensioning strap winding (31) is positioned on the piston tube (23) at the beginning (so) of the force limitation path (s); or **in that,** for an undulating force level profile, the tensioning strap winding (31) is positioned on a center portion of the piston tube (23).

7. safety belt device according to any one of the preceding claims, **characterized in that,** in the buckled state, a safety belt (1) having a belt tongue (7) is in a releasable connection with a belt buckle (9) at the vehicle which can be fastened to the vehicle body (17) via a wire cable element (15) and via the force limiting unit (13); and **in that** the cable end of the wire cable element (15) is guided through the piston tube (23) and is connected to the piston (25).

## Revendications

1. Dispositif de ceinture de sécurité pour véhicule, comprenant une unité de limitation de la force de ceinture (13), laquelle est conçue sous la forme d'un agencement piston-cylindre à partir d'un tube de piston (23) et d'un piston (25), lequel, en cas de limitation de la force de ceinture, en particulier en cas de collision, peut être déplacé par dilatation ainsi que par déformation plastique d'une trajectoire de limitation de force (s) dans le tube de piston (23) de telle sorte que la force de ceinture (F) exercée sur un passager du véhicule est limitée à un niveau de force prédéfini, **caractérisé en ce que** le dispositif de ceinture de sécurité comporte une unité de commutation (36) au moyen de laquelle, en fonction de la taille, du poids et/ou de la position assise du passager du véhicule, une courbe de niveau de force (F(s)) sur la trajectoire de limitation de force (s) peut être prédéfinie, et **que** l'unité de commutation (36) est en liaison de signal avec un système de détection de collision (38) et avec un système de détection de reconnaissance de passager (40), au moyen desquels la taille, le poids et/ou la position assise du passager du véhicule peuvent être déterminés, et **qu**'au moyen de l'unité de commutation (36), dans une phase de précollision, un élément de réglage (32) peut être commandé, au moyen duquel, en fonction de la taille/du poids ou de la position assise du passager du véhicule, une résistance de composant du tube de piston (23) peut être réduite/augmentée.

2. Dispositif de ceinture de sécurité selon la revendication 1, **caractérisé en ce que** l'élément de réglage (32) comporte une bande de traction (28) en forme de boucle, et **en ce que** la bande de traction (28), en fonctionnement normal du véhicule, c'est-à-dire dans une position de non-utilisation, est enroulée de manière lâche avec un jeu de mouvement (52) autour du tube de piston (23) et n'a aucune influence sur la résistance de composant du tube de piston (23), et que la bande de traction (28), par une commande appropriée de l'unité de commutation (36), c'est-à-dire dans une position d'utilisation, est enroulée autour du tube de piston (23) formant une structure à double tube à une contrainte de traction et augmente la résistance de composant du tube de piston (23).

3. Dispositif de ceinture de sécurité selon la revendication 2, **caractérisé en ce que** l'élément de réglage (32) comporte une unité de prétensionneur (30), en particulier pyrotechnique, pouvant être déclenchée électriquement, et **que** la bande de traction (28), à l'aide d'une languette de fixation (44), peut être fixée à la carrosserie du véhicule (17) et à l'aide de laquelle une autre languette de traction (48) sur l'unité de prétensionneur (30) est en liaison par signal avec l'unité de commutation (36) et peut être commandée par celle-ci.

4. Dispositif de ceinture de sécurité selon la revendication 2 ou 3, **caractérisé en ce que** la bande de traction (28) est une bride en tôle, laquelle, dans un dérouleur, comporte une languette de fixation (44) large dotée d'une ouverture (46) en forme de fenêtre, dans lequel la languette de fixation (44) passe dans le cours ultérieur dans une direction longitudinale dans une languette de traction (48) étroite, et dans lequel la languette de traction (48), pour former un enroulement de bande de traction (31), est guidée à travers l'ouverture (46) en forme de fenêtre, à travers laquelle le tube de piston (23) s'étend, et est reliée à l'unité de prétensionneur (30).

5. Dispositif de ceinture de sécurité selon l'une quelconque des revendications précédentes, **caractérisé en ce que** le tube de piston (23) est conçu côté circonférence intérieure et/ou extérieure sur toute sa longueur de tube présentant un diamètre intérieur et extérieur constant et/ou cylindrique lisse, et/ou **que** l'enroulement de bande de traction (31) est conçu côté circonférence intérieure et/ou extérieure sur toute sa longueur de tube (I_{R}) présentant un diamètre intérieur et extérieur constant et/ou cylindrique lisse.

6. Dispositif de ceinture de sécurité selon l'une quelconque des revendications 4 ou 5, **caractérisé en ce que,** pour une courbe de niveau de force progressive, l'enroulement de bande de traction (31) est positionné à l'extrémité (sₘₐₓ) de la trajectoire de limitation de force (s) sur le tube de piston (23) ou **que,** pour une courbe de niveau de force dégressive, l'enroulement de bande de traction (31) est positionné au début (so) de la trajectoire de limitation de force (s) sur le tube de piston (23) ou **que,** pour une courbe de niveau de force ondulante, l'enroulement de bande de traction (31) est positionné sur une section centrale du tube de piston (23).

7. Dispositif de ceinture de sécurité selon l'une quelconque des revendications précédentes, **caractérisé en ce qu'une** ceinture de sécurité (1), dans l'état appliqué avec une languette de ceinture (7), est en liaison détachable avec une serrure de ceinture (9) côté véhicule, laquelle, au moyen d'un élément de câble métallique (15) et de l'unité de limitation de force (13), peut être fixée à la carrosserie du véhicule (17), et **que** l'élément de câble métallique (15) est guidé au moyen de son extrémité de câble à travers le tube de piston (23) et est relié au piston (25).
